# EUROPÄISCHE PATENTANMELDUNG

(11) **EP 2 413 397 A1**
(43) Veröffentlichungstag der Anmeldung: **01.02.2012**
(21) Anmeldenummer: 11175043.6
(22) Anmeldetag: 22.07.2011
(51) Int. Cl.: H01M 2/10, H01M 10/50

(54) **Vorrichtung zur Aufnahme eines galvanischen Elementes, Energiespeichereinheit sowie Energiespeicherstack**

(30) Priorität: 28.07.2010 DE 102010036686
(71) Anmelder: Hoppecke Abt, 08056 Zwickau (DE)
(72) Erfinder: Trantow, Sören, 09112 Chemnitz (DE); Schmidt, Torsten, 06166 Landsberg (DE); Reinhold, Stefan, 08058 Zwickau (DE)
(74) Vertreter: Vogel, Andreas

(57) **Zusammenfassung**

Die Erfindung betrifft eine Vorrichtung (1) zur Aufnahme eines flexiblen galvanischen Elementes (10), aufweisend einen elektrisch nicht leitenden Grundkörper (2) und einen metallisch ausgebildeten Kühlkörper (5), die aneinander befestigt sind, wobei die Vorrichtung (1) eine Grundfläche (3) und mindestens ein im Bereich des Randes der Grundfläche (3) angeordnetes Rahmenelement (4) aufweist, wobei die Grundfläche (3) durch einen ersten Teil (5a) des Kühlkörpers (5) und das mindestens eine Rahmenelement (4) durch zumindest einen Teil des Grundkörpers (2) gebildet werden, wobei ein zweiter Teil (5b) des Kühlkörpers (5) an der der Grundfläche (3) abgewandten Seite mindestens eines Rahmenelementes (4) angeordnet ist, und wobei die der Grundfläche (3) abgewandte Seite des mindestens einen Rahmenelementes (4) senkrecht oder in einem Winkel zwischen 75° und 105° geneigt zu der Grundfläche (3) der Vorrichtung (1) angeordnet ist. Ferner betrifft die Erfindung eine Energiespeichereinheit (20) und einen Energiespeicherstack (30).

## Beschreibung

Die Erfindung betrifft eine Vorrichtung zur Aufnahme eines flexiblen galvanischen Elementes. Ferner betrifft die Erfindung eine Energiespeichereinheit aufweisend ein galvanisches Element und eine Vorrichtung zur Aufnahme des galvanischen Elementes sowie einen Energiespeicherstack aufweisend zwei oder mehr elektrisch miteinander verbundene Energiespeichereinheiten.

Flexible galvanische Elemente, insbesondere wiederaufladbare Lithium-Zellen in dünnen flexiblen Gehäusen, die auch als Coffeebag-Zellen oder als Softpack-Zellen bezeichnet werden, gewinnen aufgrund ihrer hohen Energiedichte und dem daraus resultierenden niedrigen Gewicht zunehmend an Bedeutung. Beispielsweise werden derartige galvanische Elemente in elektronischen Kleingeräten, wie Mobiltelefonen, Organiser oder PDAs eingesetzt. Bei derartigen flexiblen galvanischen Elementen ist es erforderlich besondere Sicherheitsvorkehrungen zu treffen, da diese aufgrund ihrer hohen Energiedichten und des brennbaren organischen Elektrolyten anfällig sind.

Ein Problem bei derartigen flexiblen galvanischen Elementen ist daher die Abführung der in der elektrochemischen Zelle der galvanischen Elemente entstehenden Wärme. Es ist bekannt, einen Teil der flexiblen galvanischen Elemente, das heißt einen Teil des Gehäuses der flexiblen galvanischen Elemente, insbesondere der Coffeebag-Zelle, an einem Kühlblech anzuordnen, um die in der elektrochemischen Zelle des galvanischen Elementes entstehende Wärme abzutransportieren. Die Gefahr, die bei einer derartigen Verbindung zwischen dem flexiblen galvanischen Element und einem Kühlblech besteht, ist, dass die Verbindung zwischen dem flexiblen galvanischen Element, das heißt insbesondere dem flexiblen Gehäuse der Coffeebag-Zelle, und dem Kühlblech bei äußerer Einwirkung einfach beschädigt und leicht gelöst werden kann. Ferner besteht die Gefahr der Potentialbildung auf dem Kühlblech bei fehlerhaftem Kontakt des flexiblen galvanischen Elementes, insbesondere der Coffeebag-Zelle, zu dem Kühlblech. So kann es zu einer Potentialbildung auf einem Kühlblech kommen, welches eine Coffeebag-Zelle kühlt, wenn beispielsweise die Siegelnaht der Coffeebag-Zelle, die die Verbindung von zwei das flexible Gehäuse bildende Folien darstellt, in Kontakt zu dem Kühlblech kommt.

Die der Erfindung zugrundeliegende Aufgabe liegt daher darin, eine Vorrichtung zur Aufnahme eines flexiblen galvanischen Elementes, eine Energiespeichereinheit sowie einen Energiespeicherstack zu schaffen, bei denen die zuvor beschriebenen Nachteile vermieden werden. Insbesondere soll das flexible galvanische Element ausreichend geschützt werden und eine Potentialbildung zu einem das flexible galvanische Element kühlenden Kühlblech sicher verhindert werden.

Diese Aufgabe wird erfindungsgemäß durch eine Vorrichtung zur Aufnahme eines flexiblen galvanischen Elementes mit den Merkmalen gemäß dem unabhängigen Patentanspruch 1, durch eine Energiespeichereinheit mit den Merkmalen gemäß Patentanspruch 8 sowie durch ein Energiespeicherstack mit den Merkmalen gemäß Patentanspruch 15 gelöst. Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Vorrichtung zur Aufnahme eines galvanischen Elementes beschrieben sind, selbstverständlich auch im Zusammenhang mit der erfindungsgemäßen Energiespeichereinheit sowie dem erfindungsgemäßen Energiespeicherstack und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch eine Vorrichtung zur Aufnahme eines flexiblen galvanischen Elementes, aufweisend einen elektrisch nicht leitenden Grundkörper und einen metallisch ausgebildeten Kühlkörper, die aneinander befestigt sind, wobei die Vorrichtung eine Grundfläche und mindestens ein im Bereich des Randes der Grundfläche angeordnetes Rahmenelement aufweist, wobei die Grundfläche durch einen ersten Teil des Kühlkörpers und das mindestens eine Rahmenelement durch zumindest einen Teil des Grundkörpers gebildet werden, wobei ein zweiter Teil des Kühlkörpers an der der Grundfläche abgewandten Seite mindestens eines Rahmenelementes angeordnet ist, und wobei die der Grundfläche abgewandte Seite des mindestens einen Rahmenelementes senkrecht oder in einem Winkel zwischen 75° und 105° geneigt zu der Grundfläche der Vorrichtung angeordnet ist, gelöst.

Ein flexibles galvanisches Elemente wird im Sinne der Erfindung durch eine oder mehrere elektrochemische Zellen gebildet, die von einem nicht eigensteifen Gehäuse, das heißt beweglichen beziehungsweise in seiner Form flexiblen Gehäuse, umgeben sind. Derartige flexible galvanische Elemente sind vorzugsweise flach ausgebildet.

Eine derartige Vorrichtung ermöglicht einerseits einen sicheren Schutz des aufgenommenen flexiblen galvanischen Elementes und verhindert andererseits aufgrund der speziellen Anordnung des Grundkörpers und des Kühlkörpers eine Potentialbildung auf dem Kühlkörper aufgrund eines falschen Kontaktes des flexiblen galvanischen Elementes zu dem Kühlblech. Das flexible galvanische Element weist vorteilhafterweise wenigstens eine elektrochemische Zelle auf, die durch ein flaches, flexibles, das heißt nicht eigensteifes, Gehäuse dicht umschlossen ist. Das flexible Gehäuse wird vorteilhafterweise durch zwei verklebte und/oder siegelnahtverbundene Folien gebildet ist. Es ist auch denkbar, dass das flexible Gehäuse durch mehr als zwei Folien gebildet ist.

Die wenigstens eine durch das flexible Gehäuse umschlossene elektrochemische Zelle ist vorteilhafterweise eine wiederaufladbare Lithium-Zelle.

Der elektrisch nicht leitende Grundkörper der Vorrichtung zur Aufnahme eines flexiblen galvanischen Elementes dient insbesondere als Schutz des aufgenommenen flexiblen galvanischen Elementes. Ferner dient der elektrisch nicht leitende Grundkörper als Isolierung zwischen Teilen des flexiblen galvanischen Elementes und Teilen des Kühlkörpers. Der elektrisch nicht leitende Grundkörper und der metallisch ausgebildete Kühlkörper sind aneinander befestigt. Insbesondere ist eine Folie des Gehäuses des flexiblen galvanischen Elementes an dem ersten Teil des Kühlkörpers befestigt. Dabei ist die eine Folie des Gehäuses des flexiblen galvanischen Elementes derart an dem ersten Teil des Kühlkörpers der Vorrichtung zur Aufnahme des flexiblen galvanischen Elementes befestigt, dass die Verbindung zu der wenigstens einen zweiten Folie des Gehäuses nicht in Kontakt zu dem Kühlkörper, insbesondere dem zweiten Teil des Kühlkörpers, kommt.

Vorteilhafterweise kann der elektrisch leitende Grundkörper, der insbesondere aus Kunststoff ausgebildet ist, um den metallisch ausgebildeten Kühlkörper gespritzt sein. Die Vorrichtung zur Aufnahme eines flexiblen galvanischen Elementes weist eine Grundfläche und ein oder mehrere im Bereich des Randes der Grundfläche angeordnete Rahmenelemente auf. Dabei ist das mindestens eine Rahmenelement vorteilhafterweise senkrecht zu der Grundfläche angeordnet. Alternativ kann das mindestens eine Rahmenelement auch geneigt, insbesondere in einem Winkel zwischen 75°und 105° geneigt, zu der Grundfläche der Vorrichtung angeordnet sein. Das mindestens eine Rahmenelement dient insbesondere zum seitlichen Schutz des umschlossenen flexiblen galvanischen Elementes. Das mindestens eine Rahmenelement kann dabei leicht beabstandet zu der Grundfläche oder direkt an der Grundfläche der Vorrichtung angeordnet sein.

Die Grundfläche der Vorrichtung wird durch einen ersten Teil des Kühlkörpers gebildet. Dieser erste Teil des Kühlkörpers ist insbesondere als eben ausgebildetes Kühlblech ausgebildet. In einer möglichen alternativen Ausgestaltung kann der erste Teil des Kühlkörpers beispielsweise auch gewellt ausgebildet sein. Dabei kann das Kühlblech als Vollprofil oder perforiert, das heißt mit Löchern versehen, ausgebildet sein. Ferner kann die Grundfläche der Vorrichtung unterschiedliche Formen aufweisen. Vorteilhafterweise ist die Grundfläche der Vorrichtung eckig, insbesondere rechteckig ausgebildet. Alternativ dazu kann die Grundfläche der Vorrichtung beispielsweise kreis- oder ellipsenförmig ausgebildet sein.

Ein zweiter Teil des Kühlkörpers ist an der der Grundfläche abgewandten Seite mindestens eines Rahmenelementes angeordnet. Vorteilhafterweise weist das zumindest eine Rahmenelement eine ähnliche Form auf, wie der Randbereich der Grundfläche beziehungsweise wie ein Teil des Randbereiches der Grundfläche der Vorrichtung. Ferner ist das mindestens eine Rahmenelement durch zumindest einen Teil des Grundkörpers gebildet. Da der Grundkörper und damit das mindestens eine Rahmenelement elektrisch nicht leitend ausgebildet sind, isoliert das mindestens eine Rahmenelement das umschlossene flexible galvanische Element von dem zweiten Teil des Kühlkörpers. Das heißt, die Vorrichtung zur Aufnahme des flexiblen galvanischen Elementes ist derart ausgebildet, dass bei einer Aufnahme eines flexiblen galvanischen Elementes das mindestens eine Rahmenelement zwischen dem Rand des flexiblen galvanischen Elementes und dem zweiten Teil des Kühlkörpers angeordnet ist. Durch die Trennung beziehungsweise Isolierung des flexiblen galvanischen Elementes, insbesondere der Siegelnaht des flexiblen galvanischen Elementes, und des zweiten Teiles des Kühlkörpers kann vermieden werden, dass es zu einer Potentialbildung auf dem zweiten Teil des Kühlkörpers kommt. Ferner schützt das zumindest eine Rahmenelement das in der Vorrichtung aufgenommene flexible galvanische Element, insbesondere die Coffeebag-Zelle, vor äußeren Einflüssen, insbesondere Beschädigungen.

Je nach Ausgestaltung der Grundfläche der Vorrichtung kann das mindestens eine Rahmenelement eine unterschiedliche Form aufweisen. Ist die Grundfläche der Vorrichtung zum Beispiel ellipsen- oder kreisförmig ausgebildet, weist das mindestens eine Rahmenelement vorteilhafterweise eine teilellipsenförmige oder teilkreisförmige Gestalt auf. Ist die Grundfläche der Vorrichtung eckig, insbesondere rechteckig, ausgebildet, ist das mindestens eine Rahmenelement vorteilhafterweise ebenfalls eckig, insbesondere u-förmig, ausgebildet. Es können auch zwei oder mehr räumlich voneinander getrennte Rahmenelemente vorgesehen sein, die in Summe eine eckige, insbesondere u-förmige, Gestalt aufweisen.

Gemäß einer bevorzugten Weiterentwicklung der Erfindung kann bei der Vorrichtung zur Aufnahme eines flexiblen galvanischen Elementes vorgesehen sein, dass der Grundkörper ein geschlossenes rahmenförmiges Profil aufweist, wobei das mindestens eine Rahmenelement einen Teil des rahmenförmigen Profils bildet. Ein derartig ausgebildeter Grundkörper kann beispielsweise ein rechteckigförmiges oder kreisförmiges Profil aufweisen. Insbesondere kann der Grundkörper der Vorrichtung ein Profil ähnlich einem Fensterrahmen aufweisen. Vorteilhafterweise wird ein Großteil des geschlossenen rahmenförmigen Profils durch das mindestens eine Rahmenelement gebildet. Ein derartig ausgebildeter Grundkörper ermöglicht die sichere Aufnahme eines galvanischen Elementes, insbesondere einer Coffeebag -Zelle, im Inneren des Grundkörpers. An dem Teil des geschlossenen rahmenförmigen Profils, an dem kein Rahmenelement vorgesehen ist, können elektrischen Anschlüsse des flexiblen galvanischen Elementes beziehungsweise elektrische Anschlüsse, die zur Kontaktierung des flexiblen galvanischen Elementes dienen, hindurchgeführt werden.

Daher kann gemäß einer weiteren bevorzugten Weiterentwicklung bei der Vorrichtung zur Aufnahme eines flexiblen galvanischen Elementes vorgesehen sein, dass das rahmenförmige Profil rechteckig ausgebildet ist, wobei drei Seiten des rechteckig ausgebildeten Profils als Rahmenelement ausgebildet sind. Die vierte Seite des rechteckig ausgebildeten rahmenförmigen Profils weist vorzugsweise kein Rahmenelement auf, sondern vorteilhafterweise Durchführungen, Aussparungen und/oder Vertiefungen zur Hindurchführung von elektrischen Anschlüssen des flexiblen galvanischen Elementes oder zu dem flexiblen galvanischen Element und/oder Teilen des Kühlkörpers.

Bevorzugt ist ferner bei der Vorrichtung zur Aufnahme eines flexiblen galvanischen Elementes, wenn der Grundkörper ein Bodenelement aufweist, das parallel zum ersten Teil des Kühlkörpers angeordnet ist. Dabei ist das Bodenelement des Grundkörpers vorteilhafterweise auf der Seite des ersten Teils des Kühlkörpers angeordnet, die dem aufgenommenen galvanischen Element abgewandt ist. Hierdurch ist zum einen der erste Teil des Kühlkörpers durch das Bodenelement beziehungsweise den Grundkörper geschützt, andererseits erfolgt eine Trennung zu einem benachbarten flexiblen galvanischen Element, welches in einer weiteren Vorrichtung zur Aufnahme eines galvanischen Elementes angeordnet ist, wobei die weitere Vorrichtung an der ersten Vorrichtung befestigt sein kann. Hierdurch wird insbesondere vermieden, dass es aufgrund der Nähe eines benachbarten galvanischen Elementes in einer anderen Vorrichtung zu einer Potentialbildung auf einem ersten Teil des Kühlkörpers kommen kann.

Gemäß einer weiteren bevorzugten Weiterentwicklung der Erfindung kann bei der Vorrichtung zur Aufnahme eines flexiblen galvanischen Elementes vorgesehen sein, dass der Grundkörper der Vorrichtung Befestigungselemente zur Befestigung wenigstens einer weiteren derartigen Vorrichtung aufweist. Vorteilhafter Weise können die Befestigungselemente derart ausgebildet sein, dass mehrere derartige Vorrichtungen, insbesondere formschlüssig, in Reihe zueinander angeordnet werden können. Die Befestigungselemente können dabei insbesondere durch Klebeflächen, Bohrungen, Steckelemente und/oder Rastelemente und/oder durch Befestigungsschrauben und Befestigungsmuttern gebildet sein. Je nach Anzahl der aneinander befestigten Vorrichtungen, bieten sich zur Befestigung mal die eine Art der Befestigungselemente, mal die andere Art der Befestigungselemente an. Bei einer Vielzahl von Vorrichtungen ist es vorteilhaft, wenn verschiedene Arten von Befestigungselementen miteinander kombiniert werden. Klebeflächen sind vorteilhafterweise derart an dem Grundkörper der Vorrichtung anzuordnen, dass sie einen stirnseitigen Abschluss der Vorrichtung bilden, so dass zwei benachbarte Vorrichtungen sich an den Klebeflächen kontaktieren und entsprechend aneinander festgeklebt werden können.

Alternativ oder zusätzlich können Bohrungen in dem Grundkörper der Vorrichtung zur Aufnahme eines flexiblen galvanischen Elementes vorgesehen sein, durch die Schraubelemente zur Befestigung von mehreren in Reihe zueinander angeordneten Vorrichtungen hindurchgeführt werden können. Die Bohrungen sind vorzugsweise senkrecht zu der Grundfläche der Vorrichtung ausgerichtet, so dass die Bohrungen zweier benachbarter Vorrichtungen fluchtend zueinander angeordnet werden können. Zwei benachbarte Vorrichtungen zur Aufnahme eines flexiblen galvanischen Elementes können auch einfach durch Steckelemente oder Rastelemente miteinander verbunden sein. Hierzu können beispielsweise senkrecht zu der Grundfläche einer Vorrichtung angeordnete Steckelemente in entsprechende Steckaufnahmen einer benachbarten Vorrichtung eingesteckt werden. Rastelemente können beispielsweise als federelastische Haken ausgebildet sein, die in entsprechende Hinterschneidungen einer benachbarten Vorrichtung eingreifen.

Bevorzugt ist ferner eine Vorrichtung zur Aufnahme eines flexiblen galvanischen Elementes, bei der der Grundkörper der Vorrichtung Durchführungen, Aussparungen und/oder Vertiefungen zur Hindurchführung von elektrischen Anschlüssen des flexiblen galvanischen Elementes oder von elektrischen Anschlüssen zu dem galvanischen Element aufweist. Diese Anschlüsse können beispielsweise sogenannte Ableiter, insbesondere Leiter zum Pluspol oder Minuspol des flexiblen galvanischen Elementes, sein.

Weist der Grundkörper der Vorrichtung zur Aufnahme eines flexiblen galvanischen Elementes kein Bodenelement auf, umfasst vorzugsweise der gesamte Kühlkörper, das heißt der erste Teil des Kühlkörpers und der zweite Teil des Kühlkörpers, den elektrisch nicht leitenden Grundkörper zumindest in großen Teilen. Der erste Teil des Kühlkörpers und der zweite Teil des Kühlkörpers sind zur Weiterleitung der von dem flexiblen galvanischen Element aufgenommenen Wärme miteinander verbunden. Weist der Grundkörper ein Bodenelement auf, sind vorteilhafterweise Durchführungen, Aussparungen und/oder Vertiefungen zur Hindurchführung des Kühlkörpers in dem Grundkörper vorgesehen. Das heißt, insbesondere im Übergangsbereich zwischen dem ersten Teil des Kühlkörpers und dem zweiten Teil des Kühlkörpers sind derartige Durchführungen, Aussparungen und/oder Vertiefungen in dem Grundkörper, das heißt insbesondere in dem Bereich des Überganges zwischen dem mindestens einen Rahmenelement und dem Bodenelement des Grundkörpers, vorgesehen.

Gemäß einem zweiten Aspekt der Erfindung wird die Aufgabe durch eine Energiespeichereinheit aufweisend ein flexibles galvanisches Element und eine Vorrichtung zur Aufnahme des flexiblen galvanischen Elementes gelöst, wobei die Vorrichtung zur Aufnahme des flexiblen galvanischen Elementes nach einer Ausführungsvariante gemäß dem ersten Aspekt der Erfindung ausgebildet ist. Eine derartig ausgebildete Energiespeichereinheit ermöglicht einen sicheren Schutz des in der Vorrichtung aufgenommenen flexiblen galvanischen Elementes. Ferner ermöglicht eine derartige Energiespeichereinheit, dass auf dem Kühlkörper, insbesondere auf dem zweiten Teil des Kühlkörpers, keine Potentialbildung aufgrund der Nähe zu dem galvanischen Element erfolgt.

Vorzugsweise weist das flexible galvanische Element wenigstens eine elektrochemische Zelle auf, die durch ein flaches, flexibles, das heißt nicht eigensteifes, Gehäuse dicht umschlossen ist, welches durch zwei verklebte und/oder siegelnahtverbundene Folien gebildet ist. Ein derartiges galvanisches Element wird erfindungsgemäß als Coffeebag-Zelle beziehungsweise Softpack-Zelle bezeichnet. Vorzugsweise ist die elektrochemische Zelle des flexiblen galvanischen Elementes eine wiederaufladbare Lithium-Zelle. Bei einer derartigen Energiespeichereinheit werden die geklebten und/oder siegelnahtverbundenen Bereiche der Folien zum Kühlkörper, das heißt zum zweiten Teil des Kühlkörpers, isoliert, so dass es nicht zur Potentialbildung auf dem Kühlkörper, insbesondere dem zweiten Teil des Kühlkörpers, kommen kann. In einer Variante der Energiespeichereinheit kann das Gehäuse des flexiblen galvanischen Elementes durch drei oder mehr Folien gebildet sein. Die Vorrichtung zur Aufnahme des flexiblen galvanischen Elementes umschließt das flexible galvanische Element derart, dass dieses sicher vor äußeren Beschädigungen geschützt ist.

Gemäß einer besonders bevorzugten Weiterentwicklung der Erfindung kann bei der Energiespeichereinheit vorgesehen sein, dass zumindest ein Bereich einer ersten Folie des galvanischen Elementes an zumindest einem Teil der Grundfläche der Vorrichtung, also dem ersten Teil des Kühlkörpers, angeordnet ist und dass wenigstens ein Teil des verklebten und/oder siegelnahtverbundenen Bereiches des Gehäuses der elektrochemischen Zelle benachbart zum Grundkörper, insbesondere benachbart zu dem mindestens einen Rahmenelementes des Grundkörpers, angeordnet ist. Vorteilhafterweise ist die erste Folie des galvanischen Elementes großflächig an der Grundfläche der Vorrichtung angeordnet. Vorteilhafterweise ist ferner ein Großteil beziehungsweise der gesamte Bereich des verklebten und/oder siegelnahtverbundenen Bereiches des Gehäuses der elektrochemisches Zelle benachbart zu dem Grundkörper, insbesondere zu dem mindestens einem Rahmenelement des Grundkörpers, angeordnet. Hierdurch wird gewährleistet, dass im Bereich der Verklebung oder der Siegelnahtkanten der miteinander verbundenen Folien des Gehäuses des galvanischen Elementes keine Potentialbildung auf dem Kühlkörper erfolgen kann. Der Grundkörper beziehungsweise das oder die Rahmenelemente des Grundkörpers dienen als trennende Isolierung zwischen dem zweiten Teil des Kühlkörpers und dem galvanischen Element, insbesondere dem verklebten Bereich der beiden Folien beziehungsweise der Siegelnahtkante der beiden Folien.

Bevorzugt ist ferner eine Energiespeichereinheit, bei der der zumindest eine Bereich der ersten Folie des galvanischen Elementes an zumindest einem Teil der Grundfläche der Vorrichtung, das heißt an dem ersten Teil des Kühlkörpers, durch einen thermisch leitfähigen Kleber oder durch eine thermisch leitfähige Klebefolie befestigt ist. Der thermisch leitfähige Kleber beziehungsweise die thermisch leitfähige Klebefolie weist vorteilhafterweise eine sehr gute Wärmeleitfähigkeit beziehungsweise einen hohen Wärmeleitkoeffizienten auf. Der thermisch leitfähige Kleber ist insbesondere pastös ausgebildet. Die thermisch leitfähige Klebefolie ist vorteilhafterweise doppelseitig klebend ausgebildet. Durch den Kleber beziehungsweise die Klebefolie wird ermöglicht, dass das flexible Gehäuse des galvanischen Elementes beziehungsweise der elektrochemische Zelle sicher an der Grundfläche der Vorrichtung, die durch den ersten Teil des Kühlkörpers gebildet ist, befestigt ist.

Gemäß einer weiteren bevorzugten Weiterentwicklung der Erfindung kann bei der Energiespeichereinheit vorgesehen sein, dass das flexible galvanische Element Anschlüsse zur elektrischen Kontaktierung der elektrochemischen Zelle, die durch Durchführungen, Aussparungen und/oder Vertiefungen des Grundkörpers der Vorrichtung hindurchgeführt sind, aufweist. Die elektrischen Anschlüsse umfassen vorteilhafterweise einen Minuspol und eine Pluspol. Die Anschlüsse zur elektrischen Kontaktierung der elektrochemischen Zelle sind vorteilhafterweise derart ausgebildet, dass sie die äußeren Abmaße der Vorrichtung zur Aufnahme des galvanischen Elementes, insbesondere deren Breite und Höhe, nicht überschreiten.

Ferner ist eine Energiespeichereinheit bevorzugt, bei der die flexiblen, nicht eigensteifen Folien des Gehäuses der elektrochemischen Zelle Metallfolien und/oder Metall-Kunststoff-Verbund-Folien sind. Derartige Folien sind sehr flexibel ausgebildet und können sich den entsprechenden Gegebenheiten einfach anpassen. Ferner können derart ausgebildete Folien einfach mittels eines thermisch leitfähigen Klebers beziehungsweise einer thermisch leitfähigen Klebefolie an den Kühlkörper, insbesondere an den ersten Teil des Kühlkörpers, angeklebt werden.

Vorzugsweise definiert der Grundkörper der Vorrichtung die Höhe der Energiespeichereinheit, wobei die Höhe der Energiespeichereinheit die Erstreckung der Energiespeichereinheit senkrecht zur Grundfläche der Vorrichtung zur Aufnahme eines flexiblen galvanischen Elementes darstellt. Dies bedeutet, dass die in der Vorrichtung aufgenommene flexible galvanische Zelle, insbesondere die Coffeebag-Zelle, vollständig von dem Grundkörper der Vorrichtung umrandet beziehungsweise eingeschlossen ist. Dabei sind die verklebten und/oder siegelnahtverbundenen Bereiche des Gehäuses der elektrochemischen Zelle des galvanischen Elementes dem mindestens einen Rahmenelement des Grundkörpers zugeordnet. Die nicht an den ersten Teil des Kühlkörpers angeklebte Folie des Gehäuses der elektrochemischen Zelle liegt frei innerhalb des Grundkörpers der Vorrichtung, so dass die Zelle sich bei einer elektrischen Belastung, insbesondere aufgrund von elektrochemischen Vorgängen innerhalb der Zelle, ausdehnen kann, ohne dabei die äußeren Abmaße der Energiespeichereinheit zu überschreiten. Eine derartige Energiespeichereinheit ermöglicht das so genannte Atmen der elektrochemischen Zelle beziehungsweise der Folie der elektrochemischen Zelle, die nicht an den ersten Teil des Kühlkörpers angeklebt ist.

Eine derartig ausgebildete Energiespeichereinheit ermöglicht nicht nur die sichere Fixierung des galvanischen Elementes, insbesondere der ersten Folie des Gehäuses der elektrochemischen Zelle, an dem Kühlkörper, insbesondere dem ersten Teil des Kühlkörpers, sondern ermöglicht auch eine sehr gute Wärmeableitung des flexiblen galvanischen Elementes bei einer elektrischen Belastung des galvanischen Elementes. Die auf den ersten Teil des Kühlkörpers übertragene Wärme wird von dem ersten Teil des Kühlkörpers an den zweiten Teil des Kühlkörpers weitergeleitet, von wo sie durch ein externes Kühlelement abgeleitet werden kann. Das externe Kühlelement kann beispielsweise eine Luftkühlung oder eine Fluidkühlung aufweisen.

Gemäß eines dritten und letzten Aspektes der Erfindung wird die Aufgabe durch einen Energiespeicherstack aufweisend zwei oder mehr miteinander verbundenen Energiespeichereinheiten gelöst, wobei die Energiespeichereinheiten gemäß zumindest einer Ausführungsvariante gemäß dem zweiten Aspekt der Erfindung ausgebildet sind. Durch die spezielle Ausgestaltung der Energiespeichereinheiten können diese einfach aneinander befestigt werden. Die Befestigung zweiter benachbarter Energiespeichereinheiten erfolgt über die Befestigungselemente der jeweiligen Vorrichtung zur Aufnahme des galvanischen Elementes. Insbesondere kann die Befestigung zweier benachbarter Vorrichtungen durch eine Klebeverbindung an den vorteilhafterweise vorgesehenen Klebeflächen vorgesehen sein. Alternativ oder zusätzlich können zwei benachbarte Vorrichtungen zur Aufnahme eines galvanischen Elementes durch Steckelemente und/oder Rastelemente miteinander verbunden sein. Ferner können Bohrungen in dem Grundkörper der Vorrichtungen zur Aufnahme des galvanischen Elementes vorgesehen sein, durch die Befestigungsschrauben zur Befestigung zweier oder mehrerer benachbarter Vorrichtungen hindurchgeführt werden können. Besonders bevorzugt ist es, wenn verschiedene Befestigungsarten beziehungsweise Befestigungselemente miteinander kombiniert werden. Hierdurch kann eine besonders sichere Befestigung der Energiespeichereinheiten aneinander gewährleistet werden.

Gemäß einer besonders bevorzugten Weiterentwicklung der Erfindung kann bei dem Energiespeicherstack vorgesehen sein, dass die Energiespeichereinheiten derart aneinander befestigt sind, dass die zweiten Teile der Kühlkörper der jeweiligen Vorrichtungen fluchtend zueinander angeordnet sind. Eine derartige Anordnung der Energiespeichereinheiten zueinander beziehungsweise der zweiten Teile der Kühlkörper der jeweiligen Vorrichtungen zueinander ermöglicht, dass die zweiten Teile der Kühlkörper in Summe eine oder mehrere ebene Flächen bilden, an die ebenfalls eben ausgebildete externe Kühlelemente angelegt werden können, um die von den galvanischen Elementen beziehungsweise elektrochemischen Zellen an die zweiten Teile der Kühlkörper der Vorrichtungen abgegebene Wärme abzuleiten. Die Summe der zweiten Teile der Kühlkörper der mehreren Vorrichtungen kann beispielsweise auch bereichsweise zylindermantelförmig ausgebildet sein. Dies ermöglicht die Anlage eines ebenfalls zylindermantelförmig ausgebildeten externen Kühlelementes.

Die galvanischen Zellen der miteinander verbundenen Energiespeichereinheiten können parallel oder seriell zueinander verschaltet werden. Hierdurch kann die Kapazität und/oder die Spannung des Energiespeicherstacks, der auch als Batteriestack bezeichnet werden kann, erhöht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1:: in einer perspektivische Darstellung eine Energiespeichereinheit, die nach dem erfindungsgemäßen Konstruktionsprinzip ausgebildet ist,
- Figur 2:: in einer Explosionsdarstellung einen Teil einer weiteren Energiespeichereinheit, die nach dem erfindungsgemäßen Konstruktionsprinzip ausgebildet ist,
- Figur 3:: in einer perspektivischen Explosionsdarstellung einen Energiespeicherstack, der nach dem erfindungsgemäßen Konstruktionsprinzip ausgebildet ist.

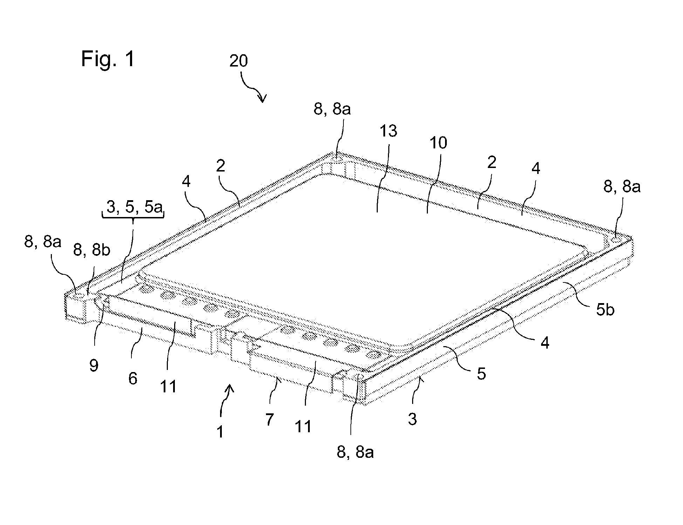

Elemente mit gleicher Funktion und Wirkungsweise sind in den Figuren 1 bis 3 jeweils mit denselben Bezugszeichen versehen.

Fig. 1 zeigt in einer perspektivischen Darstellung eine Ausführungsvariante der Energiespeichereinheit 20, die nach dem erfindungsgemäßen Konstruktionsprinzip ausgebildet ist. Die Energiespeichereinheit 20 weist ein flexibles galvanisches Element 10, insbesondere eine durch ein dünnes flexibles Gehäuse umgebene wiederaufladbare Lithium-Zelle, sowie eine Vorrichtung 1 zur Aufnahme des flexiblen galvanischen Elementes 10 auf. Die Vorrichtung 1 zur

Aufnahme des galvanischen Elementes 10 weist einen elektrisch nicht leitenden Grundkörper 2 und einen metallisch ausgebildeten Kühlkörper 5 auf. Der Grundkörper 2 und der Kühlkörper 5 sind dabei aneinander befestigt. Die Vorrichtung 1 weist eine Grundfläche 3 und mindestens ein im Bereich des Randes der Grundfläche 3 angeordnetes Rahmenelement 4 auf. Die Grundfläche 3 der Vorrichtung 1 wird durch einen ersten Teil 5a des Kühlkörpers 5 gebildet. Das mindestens eine Rahmenelement 4 der Vorrichtung 1 wird durch zumindest einen Teil des Grundkörpers 2 der Vorrichtung 1 gebildet. Ein zweiter Teil 5b des Kühlkörpers 5 ist an der der Grundfläche 3 der Vorrichtung 1 abgewandten Seite mindestens eines Rahmenelementes 4 angeordnet, wobei die der Grundfläche 3 abgewandte Seite des mindestens einen Rahmenelementes 4 senkrecht zu der Grundfläche 3 der Vorrichtung 1 angeordnet ist. In einer nicht dargestellten Ausführungsvariante der Energiespeichereinheit kann bei der Vorrichtung vorgesehen sein, dass die der Grundfläche abgewandte Seite des mindestens einen Rahmenelementes 4 in einem Winkel zwischen 75 Grad und 105 Grad geneigt zu der Grundfläche 3 der Vorrichtung 1 angeordnet ist.

Eine derartig ausgebildete Energiespeichereinheit 20 ermöglicht einerseits einen sicheren Schutz des flexiblen galvanischen Elementes 10 und verhindert andererseits, dass es zu einer Potentialbildung auf dem Kühlkörper 5, insbesondere auf dem zweiten Teil 5b des Kühlkörpers 5, aufgrund eines Kontaktes der vorzugsweise siegelnahtverbundenen Folien 13, 14 des flexiblen Gehäuses 12 des galvanischen Elementes 10 zu dem Kühlkörper 5, insbesondere zu dem zweiten Teil 5b des Kühlkörpers 5, kommt.

Der elektrisch nicht leitende Grundkörper 2 der Vorrichtung 1 zur Aufnahme des flexiblen galvanischen Elementes 10 weist in diesem Ausführungsbeispiel ein geschlossenes rahmenförmiges Profil 6 auf. Dieses rahmenförmige Profil 6 ist einem Fensterrahmen ähnlich, wobei an einer Seite des rahmenförmigen Profils Aussparrungen beziehungsweise Vertiefungen 9 im Profil 6 vorgesehen sind, die zur Hindurchführung von elektrischen Anschlüssen 11 des flexiblen galvanischen Elementes 10 beziehungsweise zur Hindurchführung von elektrischen Anschlüssen 11 zu dem flexiblen galvanischen Element 10 dienen. Das Rahmenelement 6 der Vorrichtung 1 ist u-förmig zueinander angeordnet. Das flexible galvanische Element 10 ist derart in der Vorrichtung 1 angeordnet, dass die siegelnahtverbundenen Bereiche der beiden Folien 13, 14, die das nicht eigensteife Gehäuse 12 des galvanischen Elementes 10 bilden, benachbart zu dem elektrisch nicht leitenden Rahmenelemente 4 liegen. Das heißt, das elektrisch nicht leitende Rahmenelement 4 liegt zwischen dem siegelnahtverbundenen Bereich des Gehäuses 12 des flexiblen galvanischen Elementes 10 und dem zweiten Teil 5b des Kühlkörpers 5. Hierdurch verhindert das Rahmenelement 4, dass die siegelnahtverbundenen Bereiche des Gehäuses 12 des galvanischen Elementes 10 in Kontakt zu dem Kühlkörper 5, insbesondere zu dem zweiten Teil 5b des Kühlkörpers 5, kommen und dadurch eine Potentialbildung auf dem Kühlkörper 5 beziehungsweise dem zweiten Teil 5b des Kühlkörpers 5 erfolgen kann.

In der in Fig. 1 dargestellten Ausführungsvariante der Energiespeichereinheit 20 weist die Vorrichtung 1 zur Aufnahme des flexiblen galvanischen Elementes 10 ein Bodenelement 7 auf, das auf der dem flexiblen galvanischen Element 10 abgewandten Seite der Grundfläche 3 der Vorrichtung 1, das heißt dem ersten Teil 5a des Kühlkörpers 5, angeordnet ist. Das Bodenelement 7, welches elektrisch nicht leitend ausgebildet ist, dient insbesondere als Isolierung zu einer an der Energiespeichereinheit 20 angeordneten weiteren Energiespeichereinheit 20.

Der elektrisch nicht leitende Grundkörper 2 weist an seinen Ecken Befestigungselemente 8 auf, die zur Befestigung eines oder zweier weiterer Energiespeichereinheiten 20 dienen. Die Befestigungselemente 8 können verschiedenartig ausgebildet sein. Insbesondere sind Klebeflächen 8b vorgesehen, an denen benachbarte Energiespeichereinheiten 20 mittels eines Klebers befestigt werden können. Ferner weist der Grundkörper 2 der Vorrichtung 1 Bohrungen 8a auf durch die zur Befestigung mehrere Energiespeichereinheiten 20 Befestigungsschrauben hindurchgeführt werden können. Die Bohrungen 8a verlaufen vorteilhafterweise senkrecht zu der Grundfläche 3 der Vorrichtung 1. Dabei sind die Bohrungen 8a derart in dem Grundkörper 2 angeordnet, dass die Bohrungen 8a benachbarter Energiespeichereinheiten 20 fluchtend zueinander angeordnet werden können.

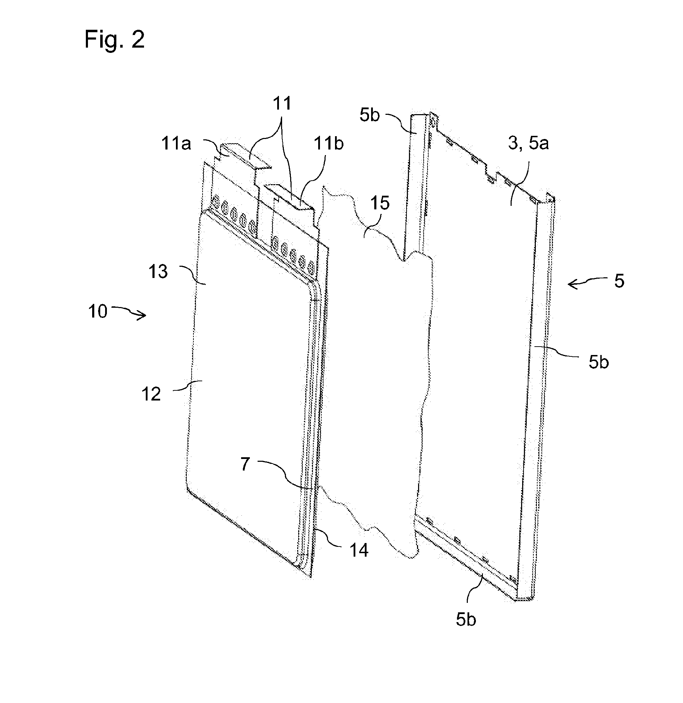

Fig. 2 zeigt in einer Explosionsdarstellung einen Teil einer weiteren Energiespeichereinheit 20, die nach dem erfindungsgemäßen Konstruktionsprinzip ausgebildet ist. Das flexible galvanische Element 10 weist ein Gehäuse 12 sowie eine durch das Gehäuse 12 umschlossene elektrochemische Zelle auf. Das Gehäuse 12 des galvanischen Elementes 10 ist durch zwei verklebte und/oder siegelnahtverbundene Folien 13, 14 gebildet. Die Folien 13, 14 sind vorzugsweise als nicht eigensteife Metallfolien und/oder Metall-Kunststoff-Verbund-Folien ausgebildet. Das flexible galvanische Element 10 weist elektrische Anschlüsse 11 auf, insbesondere einen Minuspol 11a und einen Pluspol 11b. Die zweite Folie 14 des Gehäuses 12 wird durch eine thermisch leitfähige Klebefolie 15 an der Grundfläche 3 der Vorrichtung 1 angeklebt. Dabei ist die Grundfläche 3 der Vorrichtung 1 durch den ersten Teil 5a des Kühlkörpers 5 gebildet. An den Seiten des ersten Teiles 5a des Kühlkörpers 5 sind gekröpft beziehungsweise senkrecht abgewinkelt angeordnete zweite Teile 5b des Kühlkörpers 5 vorgesehen. Die von dem flexiblen galvanischen Element 10 beziehungsweise von der wenigstens einen elektrochemischen Zelle innerhalb des Gehäuses 12 des galvanischen Elementes 10 abgegebene Wärme wird über die zweite Folie 14 des Gehäuses 12 an den ersten Teil 5a des Kühlkörpers 5 weitergeleitet. Von dort wird die Wärme weiter zum zweiten Teil 5b des Kühlkörpers 5 geleitet, von wo sie über nicht dargestellte externe Kühlelemente abgeführt werden kann. Zwischen den vorzugsweise senkrecht zum ersten Teil 5a des Kühlkörpers 5 verlaufenden zweiten Teilen 5b des Kühlkörpers 5 und den verklebten und/oder siegelnahtverbundenen Bereichen der beiden Folien 13, 14 sind die in Figur 2 nicht dargestellten Rahmenelemente 4 des elektrisch nicht leitenden Grundkörpers 2 angeordnet. Hierdurch wird vermieden, dass es zu einer Potentialbildung auf dem Kühlkörper 5, insbesondere dem zweiten Teil 5b des Kühlkörpers 5, aufgrund des galvanischen Elementes 10 kommen kann.

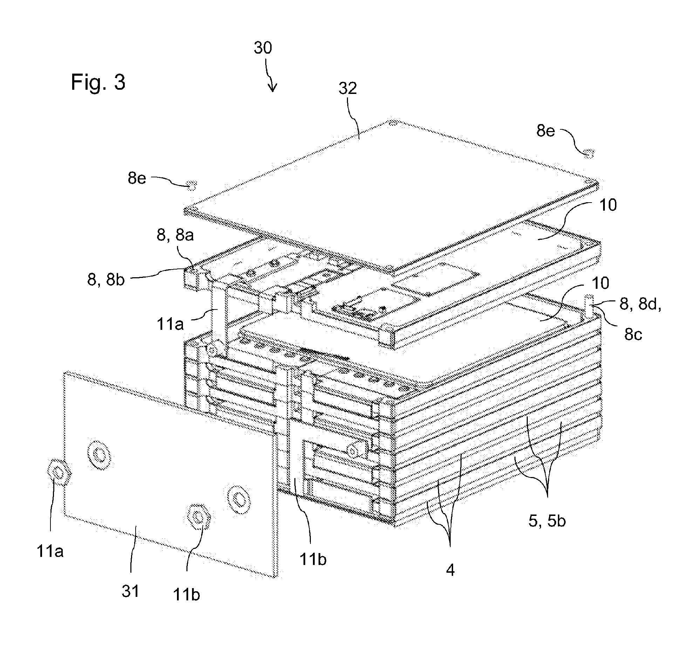

In der Fig. 3 ist in einer perspektivischen Explosionsdarstellung ein Energiespeicherstack 30 gezeigt, der nach dem erfindungsgemäßen Konstruktionsprinzip ausgebildet ist. Der Energiespeicherstack 30 zeichnet sich dadurch aus, dass mehrere Energiespeichereinheiten 20 in Reihe zueinander angeordnet sind. Dabei sind die Energiespeichereinheiten 20 über ihre Befestigungselemente 8 miteinander verbunden. Die zweiten Teilen 5b der Kühlkörper 5 der jeweiligen Vorrichtungen 1 zur Aufnahme eines flexiblen galvanischen Elementes 10 sind derart zueinander angeordnet, dass diese eine oder mehrere ebene Flächen bilden, so dass ein oder ebenfalls mehrere eben ausgebildete externe Kühlelemente plan an die zweiten Teile 5b der Kühlkörper 5 der Vorrichtungen 1 angelegt werden können, um von dort die Wärme, die von den elektrochemischen Zellen der galvanischen Elementen 10 zu den zweiten Teilen 5b der Kühlkörper 5 geleitet wird, ableiten zu können. Die elektrisch nicht leitenden Grundkörper 2 der Vorrichtung 1 weisen vorteilhafterweise in ihren Ecken Bohrungen 8a auf, durch die Befestigungsschrauben 8d zur Befestigung der Energiespeichereinheiten 20 aneinander hindurchgeführt werden können. Ferner sind Befestigungsmuttern 8e vorgesehen, die auf die durch die fluchtend angeordneten Bohrungen 8a in den Grundkörpern 2 der Energiespeichereinheiten 20 durchgesteckten Befestigungsschrauben 8d aufgedreht werden können. Der obere Abschluss des Energiespeicherstacks 30 wird durch einen Deckel 32 gebildet. Der Deckel ist elektrisch nicht leitend ausgebildet. Im Bereich der Anschlüsse 11 der flexiblen galvanischen Elemente 10 ist eine Seitenabdeckung 31 vorgesehen, die an den Energiespeichereinheiten 20 befestigt werden kann und die Durchführungen beziehungsweise Anschlüsse 11a, 11b für den Minuspol und den Pluspol des Energiespeicherstacks 30 aufweist. In jeder einzelnen Vorrichtung 1 ist ein flexibles galvanisches Element 10, welches dünn und flach ausgebildet ist, vorgesehen. Die elektrischen Anschlüsse 11 eines jeden flexiblen galvanischen Elementes 10 sind vorteilhafterweise miteinander verbunden.

Derartige Energiespeichereinheiten beziehungsweise ein derartiger Energiespeicherstack ermöglichen, dass die jeweils in einer Vorrichtung umschlossenen flexiblen galvanischen Elemente, die insbesondere als Coffeebag-Zellen bezeichnet werden, effektiv gekühlt werden können. Ein Teil des Gehäuses der jeweiligen Coffeebag-Zelle wird über einen thermisch leitfähigen Kleber oder eine thermisch leitfähige Folie auf einen ersten Teil eines Kühlkörpers, der insbesondere als Kühlblech ausgebildet ist, geklebt. Der erste Teil des Kühlkörpers leitet die Abwärme an die Seitenteile des Kühlkörpers, das heißt zweite Teile des Kühlkörpers, weiter, wo ein geeignetes externes Kühlelement über eine Luft- oder Flüssigkeitskühlung die Wärme abtransportiert. Die Coffeebag-Zellen sind nur einseitig auf die jeweiligen ersten Teile der Kühlkörper angeklebt, um das "Atmen" der Coffeebag-Zellen beim Laden und Entladen der Coffeebag-Zellen nicht zu beeinträchtigen. Der erste Teil des Kühlkörpers kann beispielsweise vollflächig ausgeführt sein. Alternativ kann der erste Teil des Kühlkörpers Kühlrippen oder Aussparungen aufweisen. Die Wärmeleitung ist in Richtung der Elektroden höher, als auf dem Kühlkörper. Der Kleber beziehungsweise die Klebefolie kann, muss aber nicht, elektrisch leitfähig ausgebildet sein. Sowohl der elektrisch nicht leitfähige Grundkörper, als auch der Kühlkörper der Vorrichtung zur Aufnahme eines galvanischen Elementes schützt die elektrochemische Zelle, das heißt die Coffeebag-Zelle, von Penetrationen und dient gleichzeitig als fixierendes Element für die Coffeebag-Zelle. Der Kühlkörper ist vorzugsweise in dem als Kunststoffrahmen ausgebildeten Grundkörper eingespritzt. Die elektrochemischen Zellen der galvanischen Elemente der Vorrichtungen können durch eine parallele oder serielle Verschaltung zu einem Energiespeicherstack, insbesondere einem Batteriestack, zusammengeführt sein. Durch den elektrisch nicht leitenden Kühlkörper, insbesondere die Rahmenelemente des elektrisch nicht leitenden Grundkörpers, werden die Siegelnahtkanten der Gehäuse der elektrochemischen Zellen zum jeweiligen Kühlkörper isoliert, so dass es nicht zu einer Potentialbildung auf den Kühlkörpern kommen kann. Die Gehäuse der flexiblen galvanischen Elemente beziehungsweise der elektrochemischen Zellen sind mittels thermisch hochleitenden Klebern beziehungsweise thermisch hochleitenden Klebefolien auf die entsprechenden Kühlkörper, insbesondere auf die ersten Teile der Kühlkörper, aufgebracht. Der Kleber beziehungsweise die Klebefolien enthalten spezielle Füllstoffe, die einen besonders guten Wärmeübergang von den elektrochemischen Zellen auf die Kühlkörper ermöglichen.

### Bezugszeichenliste

- 1: Vorrichtung zur Aufnahme eines flexiblen galvanischen Elementes
- 2: elektrisch nicht leitender Grundkörper
- 3: Grundfläche der Vorrichtung
- 4: Rahmenelement des Vorrichtung
- 5: Kühlkörper
- 5a: erster Teil des Kühlkörpers
- 5b: zweiter Teil des Kühlkörpers
- 6: geschlossenes rahmenförmiges Profil des Grundkörpers
- 7: Bodenelement des Grundkörpers
- 8: Befestigungselemente
- 8a: Bohrungen
- 8b: Klebeflächen
- 8c: Steckelemente
- 8d: Befestigungsschrauben
- 8e: Befestigungsmuttern
- 9: Durchführungen, Aussparungen, Vertiefungen im Grundkörper

- 10: flexibles galvanisches Element
- 11: Anschlüsse
- 11a: Pluspol
- 11 b: Minuspol
- 12: Gehäuse
- 13: erste verklebte und/oder siegelnahtverbundene Folie
- 14: zweite verklebte und/oder siegelnahtverbundene Folie
- 15: thermisch leitfähige Klebefolie

- 20: Energiespeichereinheit
- 30: Energiespeicherstack
- 31: Seitenabdeckung
- 32: Deckel

## Patentansprüche

1. Vorrichtung (1) zur Aufnahme eines flexiblen galvanischen Elementes (10), aufweisend einen elektrisch nicht leitenden Grundkörper (2) und einen metallisch ausgebildeten Kühlkörper (5), die aneinander befestigt sind, wobei die Vorrichtung (1) eine Grundfläche (3) und mindestens ein im Bereich des Randes der Grundfläche (3) angeordnetes Rahmenelement (4) aufweist, wobei die Grundfläche (3) durch einen ersten Teil (5a) des Kühlkörpers (5) und das mindestens eine Rahmenelement (4) durch zumindest einen Teil des Grundkörpers (2) gebildet werden, wobei ein zweiter Teil (5b) des Kühlkörpers (5) an der der Grundfläche (3) abgewandten Seite mindestens eines Rahmenelementes (4) angeordnet ist, wobei die der Grundfläche (3) abgewandte Seite des mindestens einen Rahmenelementes (4) senkrecht oder in einem Winkel zwischen 75° und 105° geneigt zu der Grundfläche (3) der Vorrichtung (1) angeordnet ist.

2. Vorrichtung (1) nach Anspruch 1, **dadurch gekennzeichnet, dass** der Grundkörper (2) ein geschlossenes rahmenförmiges Profil (6) aufweist, wobei das mindestens eine Rahmenelement (4) einen Teil des rahmenförmigen Profils (6) bildet.

3. Vorrichtung (1) nach Anspruch 1 oder 2, **dadurch gekennzeichnet, dass** das rahmenförmige Profil (6) rechteckig ausgebildet ist, wobei drei Seiten des rechteckig ausgebildeten rahmenförmigen Profils (6) als Rahmenelemente (4) ausgebildet sind.

4. Vorrichtung (1) nach wenigstens einem der vorhergehenden Ansprüche 1 bis 3, **dadurch gekennzeichnet, dass** der Grundkörper (2) ein Bodenelement (7) aufweist, das parallel zum ersten Teil (5a) des Kühlkörpers (5) angeordnet ist.

5. Vorrichtung (1) nach wenigstens einem der vorhergehenden Ansprüche 1 bis 4, **dadurch gekennzeichnet, dass** der Grundkörper (2) Befestigungselemente (8) zur Befestigung wenigstens einer weiteren Vorrichtung (1) aufweist.

6. Vorrichtung (1) nach Anspruch 5, **dadurch gekennzeichnet, dass** die Befestigungselemente (8) Klebeflächen (8b), Bohrungen (8a), Steck- oder Rastelemente (8c) und/oder Befestigungsschrauben (8d) und Befestigungsmuttern (8e) umfasst.

7. Vorrichtung (1) nach wenigstens einem der vorhergehenden Ansprüche 1 bis 6, **dadurch gekennzeichnet, dass** der Grundkörper (2) Durchführungen, Aussparungen und/oder Vertiefungen (9) zur Hindurchführung von Anschlüssen (11) des flexiblen galvanischen Elementes (10) und/oder des Kühlkörpers (5) aufweist.

8. Energiespeichereinheit (20) aufweisend ein flexibles galvanisches Element (10) und eine Vorrichtung zur Aufnahme des galvanischen Elementes (10), **dadurch gekennzeichnet, dass** die Vorrichtung (1) zur Aufnahme des flexiblen galvanischen Elementes (10) nach einem der vorhergehenden Ansprüche 1 bis 7 ausgebildet ist.

9. Energiespeichereinheit (20) nach Anspruch 8, **dadurch gekennzeichnet, dass** das flexible galvanische Element (10) wenigstens eine elektrochemische Zelle aufweist, wobei die wenigstens eine elektrochemische Zelle durch ein flaches, flexibles Gehäuse (12) dicht umschlossen ist, welches durch zwei verklebte und/oder siegelnahtverbundene Folien (13, 14) gebildet ist.

10. Energiespeichereinheit (20) nach Anspruch 9, **dadurch gekennzeichnet, dass** zumindest ein Bereich einer erste Folie (14) des galvanischen Elementes (10) an zumindest einem Teil der Grundfläche (3) der Vorrichtung (1) angeordnet ist und dass wenigstens ein Teil des verklebten und/oder siegelnahtverbundenen Bereiches des Gehäuses (12) der elektrochemischen Zelle benachbart zum Grundkörper (2), insbesondere zu dem mindestens einem Rahmenelement (4) des Grundkörpers (2), angeordnet ist.

11. Energiespeichereinheit (20) nach Anspruch 10, **dadurch gekennzeichnet, dass** der zumindest eine Bereich der ersten Folie (14) des flexiblen galvanischen Elementes (10) an zumindest einem Teil der Grundfläche (3) der Vorrichtung (1) durch einen thermisch leitfähigen Kleber oder durch eine thermisch leitfähige Klebefolie (15) befestigt ist.

12. Energiespeichereinheit (20) nach wenigstens einem der vorhergehenden Ansprüche 8 bis 11, **dadurch gekennzeichnet, dass** das flexible galvanische Element (10) Anschlüsse (11) zur elektrischen Kontaktierung der elektrochemischen Zelle aufweist, die durch Durchführungen, Aussparungen und/oder Vertiefungen (9) des Grundkörpers (2) der Vorrichtung (1) hindurchgeführt sind.

13. Energiespeichereinheit (20) nach wenigstens einem der vorhergehenden Ansprüche 9 bis 12, **dadurch gekennzeichnet, dass** die Folien (13, 14) des Gehäuses (12) der elektrochemischen Zelle Metallfolien und/oder Metall-Kunststoff-Verbund-Folien sind.

14. Energiespeichereinheit (20) nach wenigstens einem der vorhergehenden Ansprüche 8 bis 13, **dadurch gekennzeichnet, dass** der Grundkörper (2) der Vorrichtung (1) die Höhe der Energiespeichereinheit (20) definiert, wobei die Höhe die Erstreckung der Energiespeichereinheit (20) senkrecht zur Grundfläche (3) der Vorrichtung (1) ist.

15. Energiespeicherstack (30) aufweisend zwei oder mehr elektrisch miteinander verbundene Energiespeichereinheiten, **dadurch gekennzeichnet, dass** die Energiespeichereinheiten (20) gemäß wenigstens einem der vorhergehenden Ansprüche 8 bis 14 ausgebildet sind.

16. Energiespeicherstack nach Anspruch 15, **dadurch gekennzeichnet, dass** die Energiespeichereinheiten (20) derart aneinander befestigt sind, dass die zweiten Teile (5b) der Kühlkörper (5) der jeweiligen Vorrichtungen (1) fluchtend zueinander angeordnet sind.
